# EUROPEAN PATENT APPLICATION

(11) **EP 3 404 300 A1**
(43) Date of publication of application: **21.11.2018**
(21) Application number: 18173006.0
(22) Date of filing: 17.05.2018
(51) Int. Cl.: F16K 31/60, F16K 35/04

(54) **THERMOSTAT CONTROL MECHANISM AND MIXER VALVE**

(30) Priority: 19.05.2017 GB 201708079
(71) Applicant: Norcros Group (Holdings) Limited, Wilmslow, Cheshire SK9 1BU (GB)
(72) Inventor: GODFREY, Keith, Cheddar, Somerset BS27 3EB (GB)
(74) Representative: Stoner, Gerard Patrick

(57) **Abstract**

A thermostatic mixing valve has a control mechanism operable to control an outlet temperature. A thermostatic valve member has a spindle (5) and a rotary handle (4) attached to the spindle. The housing (3) incorporates a stop ring (10) providing a guide surface (11) with an end stop (15) defining a maximum temperature limit and an intermediate stop (13) in the form of a step defining an intermediate temperature limit. A sprung ball (21) is carried on a radial arm (17) of the handle and runs over the guide surface (11) of the stop ring (10) as the handle is turned. By providing sufficient turning force the ball (21) can move against the spring bias to override the intermediate stop (13) and allow further rotation past the intermediate stop to increase the temperature above the intermediate limit. The control mechanism can be housed entirely within the valve housing.

## Description

### FIELD OF THE INVENTION

The present invention relates to a valve control mechanism. In particular, it relates to control mechanisms used in thermostatic mixing valves.

### BACKGROUND

Thermostatic mixing valves are well known. Usually, such mixing valves have a housing for connection to a plumbing fixture such as a shower, and a rotary control handle for controlling the temperature of flow from an outlet of the valve.

It is known to provide control mechanisms for thermostatic mixer valves which provide an overridable temperature limit at an intermediate temperature, below the maximum available outlet temperature. The limit is generally constituted by a mechanical barrier or hindrance against turning the control handle beyond a position corresponding to the intended limit temperature. Commonly such a temperature limit is set at around 38°C, although the exact choice of limit temperature may vary slightly. Providing such an intermediate limit has safety advantages, because it can prevent a user from accidentally increasing the temperature of the outlet flow past this pre-determined temperature limit, which could result in scalding. However, a user may sometimes want to increase the outlet temperature above the intermediate temperature limit, so an override mechanism is provided to allow override of the limit by turning the control handle further.

One known configuration is to provide a stop release button on the handle which, when depressed, moves a pin clear of a stop at the limit temperature position to allow further rotation of the handle, and increase of the outlet temperature above the temperature limit.

Problems are encountered with such configurations. One problem is that users not familiar with the override mechanism often try to turn the rotary handle past the stop point without depressing the release button. Forcing the mechanism in this way can damage the mechanism, and in particular damage the pin.

Furthermore, because the stop release button must be on the outside of the rotary handle, it is susceptible to lime scale build-up. This can cause the release mechanism to seize in position and stop working.

### THE INVENTION

An aim herein is to a provide new and useful control mechanism operable to control an outlet temperature in a thermostatic mixing valve having a housing, a thermostatic valve member within said housing and having a rotatable thermostat spindle extending outwardly therefrom.

The control mechanism comprises a rotary handle attached to said thermostat spindle, for rotation by a user to control rotation of the rotatable thermostat spindle. Such rotation of the thermostat spindle controls the outlet temperature of the thermostatic mixing valve in a manner well known to the person skilled in the art. The rotary handle may be connected to the thermostat spindle via a sleeve portion of the handle. The sleeve is preferably fixed in non-rotating connection to the spindle. In this way, torque applied to the handle may be directly transmitted to the thermostat spindle via the sleeve portion. The sleeve may be formed integrally with the handle, but preferably is provided as a separate component for ease of assembly. Where the sleeve is a separate component to the handle, the sleeve may be splined to allow keying engagement between the sleeve and corresponding splines on the rotary handle.

The control mechanism further comprises a stop member. The stop member may be associated with the rotary handle, or may instead be associated with the valve housing. Preferably, the stop member is disposed on, or formed as a part of, the valve housing. Preferably the stop member is a stop ring. The stop member provides a guide surface along which a relatively moveable member can travel during rotation of the handle relative to the valve housing. Preferably, some or all of the guide surface is axially-directed, however alternative arrangements in which most or all of the guide surface is radially directed are also contemplated. The guide surface may be a stepped surface having two or more axially-directed or radially-directed portions, with a step portion between each axially-directed or radially-directed portion.

The stop member or other part of the housing provides an end stop which defines a maximum rotation limit for the rotary handle (and accordingly defines a corresponding maximum outlet temperature). The end stop may comprise a stop projection or stop body which engages with a portion of the handle to prevent rotation of the rotary handle beyond the maximum rotation limit.

The stop ring further provides an intermediate stop, which defines an intermediate rotation limit (and corresponding temperature limit) for the rotary handle. The intermediate stop is overridable, in a manner described below. Accordingly, a user operating the control mechanism can choose to override this limit and increase the outlet temperature to be higher than the intermediate temperature limit defined by the intermediate stop. The intermediate temperature limit may be selected as appropriate for the system in which the thermostatic valve is intended for use. When the thermostatic valve is intended for use in a sanitary fitting such as a shower, the intermediate temperature limit may be selected to be e.g. between 37-41°C. Preferably, the intermediate temperature limit may be selected to be 38°C. The intermediate stop may be provided by an overridable step portion of the guide surface. Alternatively, the intermediate stop may be an overridable projection, e.g. a ridge.

The control mechanism has an engagement member arranged such that rotation of the rotary handle results in relative rotary movement between the engagement member and the stop member. Preferably the engagement member is associated with the rotary handle. The engagement member may be disposed in or on an arm extending from or in the rotary handle. For example, the engagement member may be provided on an arm extending from an inner peripheral surface of the rotary handle, or may alternatively be provided on an arm extending from a sleeve portion of the handle. The arm is preferably a radial arm. The engagement member may have a cam surface such as a domed engagement portion for engagement with the guide surface. The engagement member may be a spherical or ball-like member. This can allow for reduced friction between the engagement member and the guide surface due to the small contact area between the two components, furthermore, a spherical engagement member can help to prevent jamming of the mechanism against the overridable intermediate stop.

The engagement member is biased into engagement with the guide surface of the stop member by a spring member, for example, a coil spring. Preferably, the mechanism is arranged such that the spring force acts in an axial direction relative to the axis of rotation of the rotary handle. However, the mechanism may instead be configured such that the biasing force acts in a radial direction, for example where the guide surface is radially-directed rather than axially-directed.

The engagement member is displaceable against the spring bias of the spring member. Accordingly, as the spring force preferably acts in an axial direction, the engagement member is preferably displaceable in an axial direction. However where the biasing force acts in a radial direction, the engagement member will be displaceable in a radial direction.

During rotary movement of the handle from an initial position to a maximum rotation position, the engagement member preferably travels along in contact with the guide surface of the stop member. At a predetermined angular rotation determined by the intermediate stop, the engagement member comes into engagement with the overridable intermediate stop. When this occurs, the user feels a resistance to rotation and naturally stops rotation of the handle. However, by increasing the rotational force applied to the handle, the engagement member can be moved or displaced against the biasing force of the spring member, allowing the engagement member to ride over the intermediate stop, and thereby allowing further rotation of the rotary handle past the intermediate stop. This mechanism is more intuitive to use in comparison to previous known mechanisms. Furthermore, because the engagement member is designed to ride over the intermediate stop when force is applied, this prevents damage to the mechanism, as a user is not required to undertake a separate actuation step to override the intermediate stop.

Furthermore, because there can be no features which project externally from the handle (e.g. buttons etc.), the mechanism can be less susceptible to limescale build-up.

The stop member and engagement member can be covered by part of the rotary handle or part of the housing, because the overridable intermediate stop needs no access in use.

A second aspect of the invention proposed here is a plumbing fixture comprising a control mechanism according to the above proposals. Preferably, the plumbing fixture is a shower or faucet, such as a domestic shower.

### BRIEF DESCRIPTION OF THE DRAWINGS

Embodiments of the invention will now be described by way of example with reference to the accompanying drawings in which:
Figure 1 shows a part-exploded sectional view through a control mechanism in-situ in a plumbing fixture;
Figure 2 shows a perspective view of part of the arrangement shown in Fig. 1;
Figure 3 shows a control mechanism with 3(a) an outer portion of the rotary handle removed and 3(b) with an outer portion and sleeve portion of the rotary handle removed;
Figure 4 shows 4(a) perspective, 4(b) top, 4(c) bottom, and 4(d) side views of a stop member;
Figure 5 shows an exploded perspective view of a sleeve portion of the handle;
Figure 6 shows a side view of the sleeve portion of the handle;
Figure 7 shows a sectional view of an engagement mechanism 7(a) before, and 7(b) after engagement with an intermediate stop, and
Figure 8 shows the control mechanism at three different angular displacements 8(a), 8(b) and 8(c).

### DETAILED DESCRIPTION, FURTHER OPTIONAL FEATURES

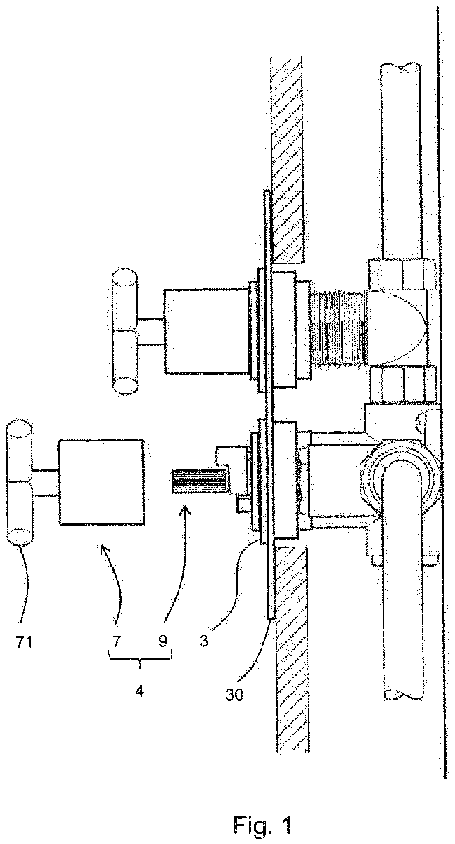

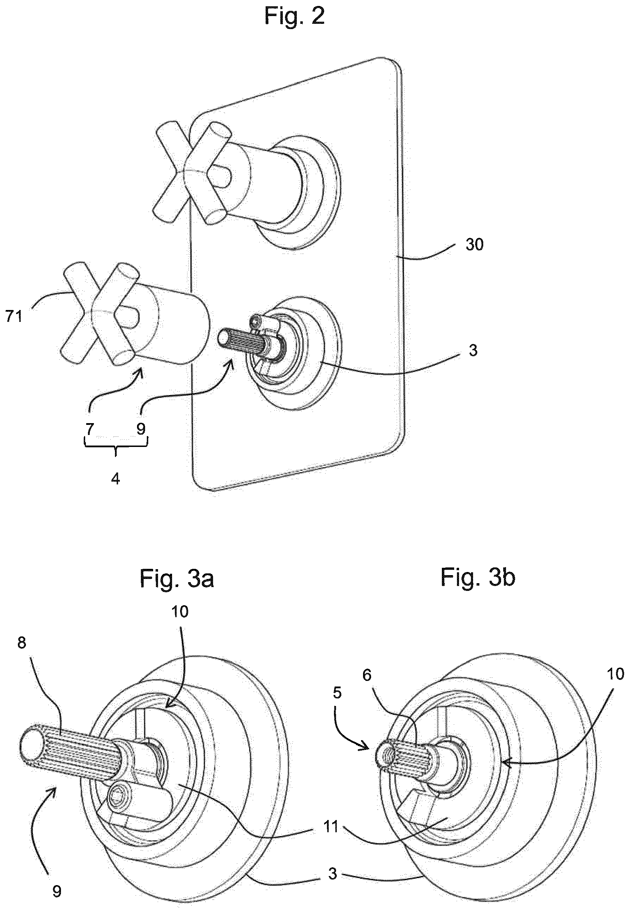

Figures 1 and 2 show respectively a part-exploded sectional view and a part-exploded perspective view of a control mechanism in-situ in a plumbing fixture. The plumbing fixture may be e.g. a domestic shower, having both a temperature control mechanism and a flow control mechanism. Here, the control mechanism is operable to control an outlet temperature of a thermostatic mixing valve having a housing 3, a thermostatic valve member within said housing and having a rotatable thermostat spindle (not visible) extending outwardly from the housing. The housing is affixed to a cover plate 30 for covering a recess in which part of the plumbing fixture is located.

Rotation of the thermostat spindle controls an outlet temperature of the valve in a manner well known to the skilled person. The rotary handle 4 (here including outer portion 7 and sleeve portion 9) of the control mechanism is therefore fixed in non-rotating or fixed connection to the thermostat spindle, so that as a user turns the rotary handle during operation, this motion is directly transmitted to the thermostat spindle to control the outlet temperature of the thermostatic mixing valve. The outer portion 7 of the rotary handle 4 includes a gripping portion 71, for gripping by a user. The outer portion 7 of the rotary handle is attached to an inner, sleeve portion 9 for connection to the thermostat spindle 5. This is most clearly seen by comparison of Figs. 2, 3(a) and 3(b). Figure 3 shows a control mechanism with (a) the outer portion of the rotary handle removed, showing the sleeve portion attached to the thermostat spindle and (b) with the entire rotary handle removed, and the thermostat spindle projecting from the centre of the control mechanism. The non-rotating connection from the outer portion of the rotary handle through to the thermostat spindle 5 is conveniently achieved by use of splined shafts: the thermostat spindle 5 has a splined portion 6, which engages with an internal splined portion (not visible) of the sleeve 9, which fits over the thermostat spindle. The sleeve also has external splines 8 which engage with splines (not visible) on the outer portion 7 of the rotary handle. However, other arrangements for provision of a non-rotating connection are also contemplated. For example the sleeve may be screwed onto the thermostat spindle, or have a dog-and-slot connection.

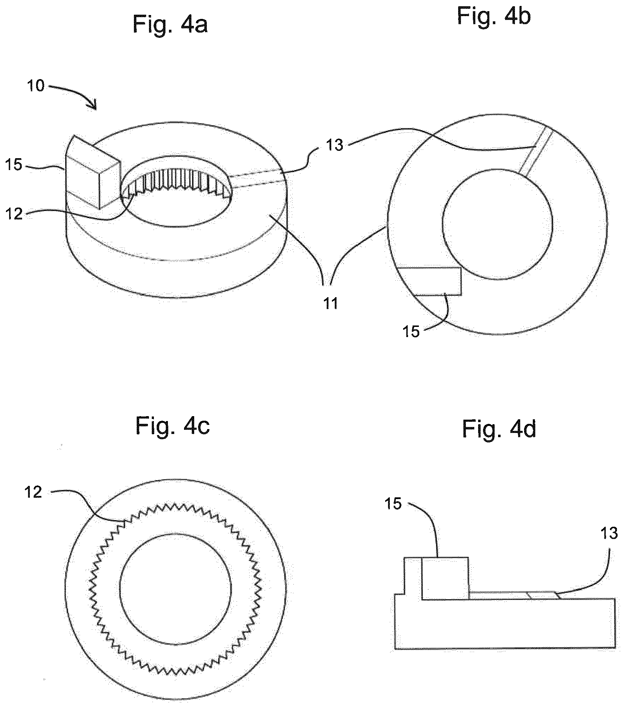

The mechanism comprises a stop member, here a stop ring 10. The stop member is here provided as a separate component disposed on the valve housing. Figure 4 shows (a) perspective, (b) top, (c) bottom, and (d) side views of the stop ring 10. The stop ring has a toothed attachment portion 12 arranged to engage with a corresponding toothed portion of the valve housing. This can prevent unwanted rotation of the stop ring relative to the housing. The stop ring comprises a guide surface 11. Here the guide surface is a stepped guide surface comprising two distinct axially-directed portions at different axial levels ("axially-directed" being defined in relation to the axis of rotation of the rotary handle of the mechanism). There is a sloped step portion 13 connecting the two axially-directed portions of the guide surface 11. This step portion forms an intermediate stop. The stop ring 10 further comprises a stop body 15 which forms an end stop. The end stop defines a maximum angular displacement (and corresponding maximum outlet temperature) of the rotary handle. As will be discussed below in relation to overall function of the mechanism, the intermediate stop is overridable by a relatively moveable engagement member which, in use, travels along the guide surface provided by the stop member.

The step portion proposed here is at an angle of approximately 45° from an axially directed plane, however this angle is not particularly limiting, and may be selected to be any angle e.g. from around 10° up to and including 90°. Preferably the angle is between 30° and 70°. A shallower angle can make the stop easier to override. A steeper angle can make the stop more difficult to override. By making the stop in step form, the resistance to overriding the stop is different depending on the direction of rotation relative to the stop. In use, therefore, a user may feel a resistance to rotation of the handle only in one rotational direction (which is preferably selected to be the direction of rotation which results in increasing outlet temperature). This has added safety advantages, as the user encounters resistance which must be overcome to increase the temperature past the intermediate stop, but there is no significant resistance to rotation in the opposite direction and so the user can reduce the temperate without an obstacle to be overridden.

As discussed above, other options for forming the intermediate stop are also contemplated. For example, the intermediate stop could be provided as a ridge extending across the guide surface 11. Preferably such a ridge would be arranged to extend perpendicularly to the direction of relative movement of the engagement member and the guide surface. Such an arrangement would provide resistance to rotation in both rotational directions which may be advantageous in some circumstances. Furthermore, it may be advantageous to provide multiple intermediate stops, e.g. two or more. Where two intermediate stop are provided, these could be used to demarcate a preferred intermediate range of operation of the rotary handle.

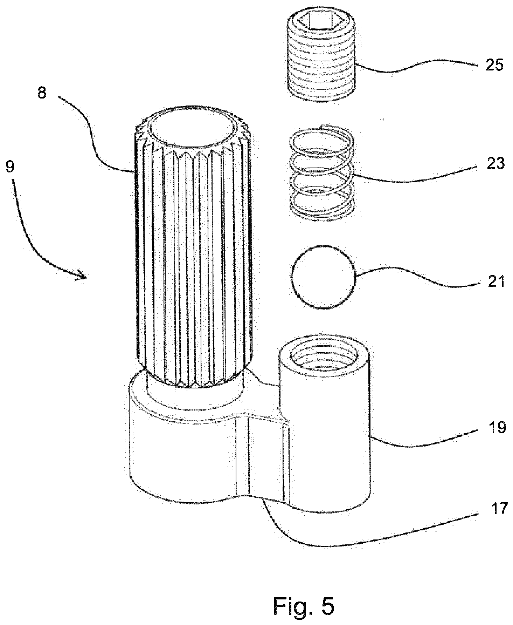

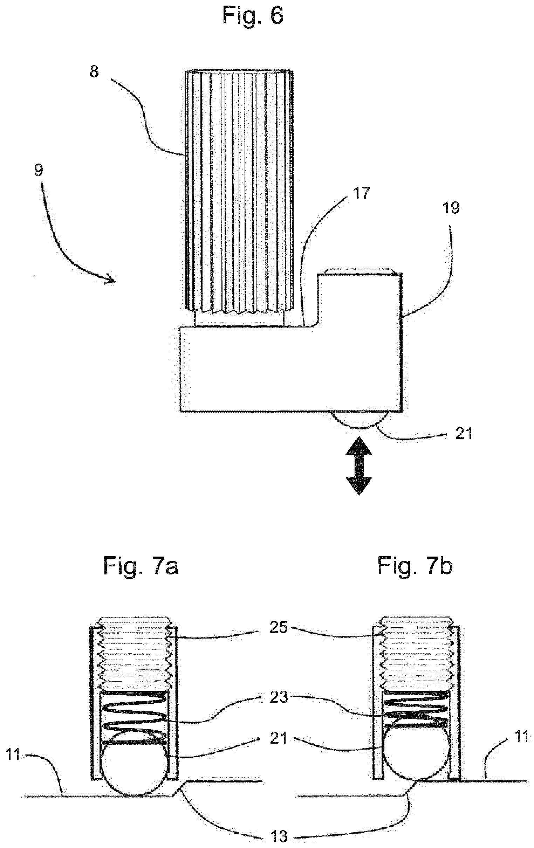

Fig. 5 shows an exploded perspective view of the sleeve portion 9 of the handle. The sleeve has an arm 17 projecting radially from the sleeve. The arm is arranged to retain engagement member 21 in a displaceable manner, as shown in Figs. 6 and 7. In this case, this is achieved by retaining the engagement member 21 within retaining housing 19 disposed at the radially outer end of arm 17. The retaining housing has a cavity of approximately the same width as the engagement member. This can help to prevent unwanted horizontal displacement of the engagement member.

The engagement member is arranged to be displaceable in an axial direction, by movement against the spring force of a spring 23 also housed in the retaining housing 19. In use, the engagement member is biased into engagement with the guide surface 11 of the stop member by spring 23. A threaded screw such as a grub screw 25 forms part of the retaining housing for the engagement member and spring member. This is by no means essential, however offers a number of advantages including ease of assembly, and adjustability of the maximum displacement and stopping force of the engagement member. The grub screw may be loosened or tightened to respectively increase or decrease the space available for the engagement member to displace into.

The engagement member 21 here is a spherical member. This means that during relative movement of the engagement member and the guide surface 11, the engagement member can roll along the surface, providing increased ease of relative movement of these components. Furthermore, a spherical member can also resist becoming jammed against the intermediate stop 13. However this is not essential, and a wide range of possible shapes for the engagement member are envisaged. Preferably, at least the portion of the engagement member which engages the guide surface of the stop member is pointed or domed. Whilst such members may not be able to roll during relative movement, they can still offer advantages relating to reduced jamming of the mechanism.

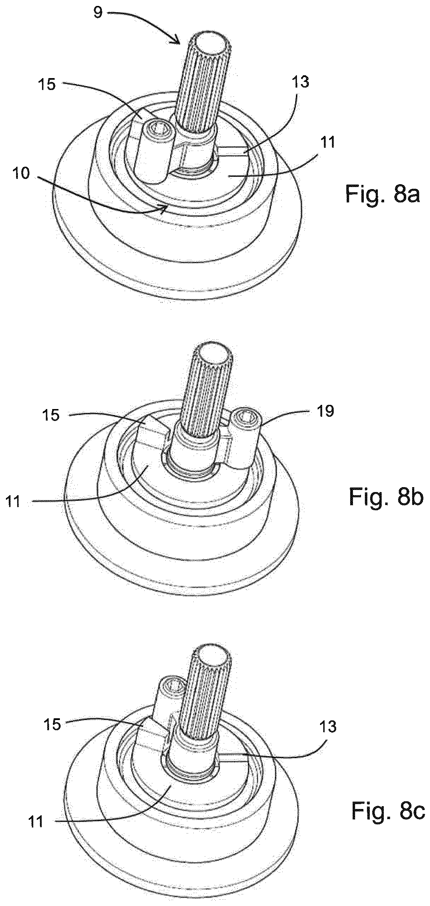

Figs. 8 (a), (b) and (c) show the control mechanism (with outer handle portion removed) at three different angular displacements. Fig. 8(a) shows the handle in an initial position. Fig 8(b) shows the mechanism at a position corresponding to engagement of the engagement member with the intermediate temperature stop 13. Fig 8(c) shows the mechanism at a position corresponding to engagement of the handle portion with the end stop on the stop member 15. Rotation of the outer portion of the rotary handle (not shown) by a user results in rotation of the sleeve portion 9 of the handle. This gives rise to corresponding travel of the engagement member (held in retaining housing 19 and not visible in Fig. 8) along guide surface 11 as the engagement member is biased into engagement with the guide surface. At a predetermined angular rotation determined by the intermediate stop 13, the engagement member comes into engagement with the overridable intermediate stop. When this occurs, the user feels a resistance to rotation and naturally stops rotation of the handle. However, by increasing the rotational force applied to the handle, the engagement member displaces upwardly against a spring bias, thereby allowing the engagement member to ride over the intermediate stop. This allows further rotation of the handle until retaining housing 19 comes into engagement with stop body 15 of the stop ring 10, thus preventing further rotation of the rotary handle.

While the invention has been described in conjunction with the exemplary embodiments described above, many modifications and variations will be apparent to those skilled in the art when given this disclosure. Accordingly, the exemplary embodiments of the invention set forth above are considered to be illustrative and not limiting.

## Claims

1. A control mechanism operable to control an outlet temperature of a thermostatic mixing valve having a housing (3), a thermostatic valve member within said housing and having a rotatable spindle (5) extending outwardly therefrom, wherein the control mechanism comprises:
a rotary handle (4) attached to said spindle;
a stop member (10) providing a guide surface (11), an end stop (15) defining a maximum temperature limit and an intermediate stop (13) defining an intermediate temperature limit;
an engagement member (21) arranged such that rotation of the handle (4) results in corresponding travel of the engagement member along the guide surface, the engagement member being biased into engagement with the guide surface by a spring (23);
wherein the engagement member is displaceable against the spring bias so that by providing sufficient rotational force, the engagement member (21) can move against the spring bias to override the intermediate stop and allow further rotation of the rotary handle past the intermediate stop to increase the outlet temperature above the intermediate temperature limit.

2. A control mechanism of claim 1 wherein the engagement member (21) is displaceable in an axial direction.

3. A control mechanism of claim 1 or claim 2 wherein the guide surface (11) is a stepped surface, and the intermediate stop (13) is a step portion of this surface, preferably a sloped step portion.

4. A control mechanism according to any one of the preceding claims wherein the intermediate stop and engagement member are covered by part (7) of the rotary handle (4).

5. A control mechanism according to any one of the preceding claims wherein resistance to overriding the intermediate stop (13) is greater in the direction of rotation of the rotary handle corresponding to increasing temperature than in the direction of rotation of the rotary handle corresponding to decreasing temperature.

6. A control mechanism according to any one of the preceding claims wherein the stop member (10) is disposed on, or is formed as part of, the housing (3).

7. A control mechanism according to any one of the preceding claims wherein the stop member (10) is a stop ring, and the spindle passes through a central opening of the ring.

8. A control mechanism according to any one of the above claims wherein the rotary handle (4) is attached to the spindle (5) via a sleeve portion (9) fixed in non-rotating connection to the spindle, such as by a spline connection, for transmission of torque from the handle to the sleeve portion.

9. A control mechanism according to any one of the preceding claims wherein the engagement member (21) and spring (23) are on an arm of the handle.

10. A control mechanism according to claim 9 wherein the engagement member and spring are held in the arm with an adjustment screw (25), which can be adjusted to limit the maximum displacement of the engagement member.

11. A control mechanism according to any one of the preceding claims wherein the engagement member (21) has a domed engagement portion.

12. A control mechanism according to any one of the preceding claims wherein the engagement member is spherical.

13. A thermostatic mixer valve comprising a control mechanism of any of the preceding claims.

14. A plumbing fixture comprising the thermostatic mixer valve of claim 13.

15. A plumbing fixture according to claim 13 which is a shower control.
